# EUROPÄISCHE PATENTSCHRIFT

(11) **EP 3 552 921 B1**
(45) Veröffentlichungstag und Bekanntmachung des Hinweises auf die Patenterteilung: **18.11.2020**
(21) Anmeldenummer: 19167833.3
(22) Anmeldetag: 08.04.2019
(51) Int. Cl.: B61L 29/00, G05D 1/02, G06K 9/00, B61L 3/00, B61L 23/04

(54) **AUTONOME GESCHWINDIGKEITSPLANUNG EINES AUF EINEN VORBESTIMMTEN PFAD BESCHRÄNKTEN BEWEGLICHEN AKTEURS**
AUTONOMOUS SPEED PLANNING OF A MOBILE ACTOR LIMITED TO A PREDETERMINED PATH
PLANIFICATION AUTONOME DE VITESSE D'UN ACTEUR MOBILE LIMITÉ À UN TRAJET PRÉDÉTERMINÉ

(30) Priorität: 13.04.2018 DE 102018205667
(43) Veröffentlichungstag der Anmeldung: 16.10.2019
(73) Patentinhaber: Siemens Mobility GmbH, 81739 München (DE)
(72) Erfinder: Nourani-Vatani, Navid, 12489 Berlin (DE); Palmer, Andrew, 10965 Berlin (DE)

(56) Entgegenhaltungen:
- WO-A2-2009/019214
- US-B1- 9 766 626

## Beschreibung

Die Erfindung betrifft ein Verfahren zur autonomen Geschwindigkeitsplanung eines zumindest halb-autonom gesteuerten, auf einen vorbestimmten Pfad beschränkten beweglichen Akteurs. Weiterhin betrifft die Erfindung eine Planungsvorrichtung. Überdies betrifft die Erfindung einen zumindest halb-autonom gesteuerten, auf einen vorbestimmten Pfad beschränkten beweglichen Akteur.

Bei vielen Szenarien des autonomen oder halb-autonomen Fahrens kann ein Fahrzeug oder ein Roboter seine Geschwindigkeit für das Fahren auf einer Fahrtroute steuern und es muss eine Trajektorie längs der Fahrtroute berechnet werden, mit der Kollisionen mit anderen Objekten vermieden werden. Ein solches Problem tritt insbesondere bei Schienenfahrzeugen, wie zum Beispiel Zügen, S-Bahnen oder Straßenbahnen auf. Die Bewegung dieser Schienenfahrzeuge ist naturgemäß auf das Fahren entlang von Schienenwegen eingeschränkt.

Ein ähnliches Problem tritt auch bei anderen autonom oder halb-autonom fahrenden Fahrzeugen auf. Bei halb-autonom fahrenden Straßenfahrzeugen kann die Situation auftreten, dass sie keine Straßenkarte zur Verfügung haben und nur den Straßenmarkierungen folgen. Solche Fahrzeuge können dann nur ihre Geschwindigkeit bei einer durch die befahrene Fahrspur festgelegten Fahrtroute planen. Zwar können diese Fahrzeuge einen Fahrspurwechsel vornehmen, jedoch kann es vorkommen, dass die Nachbarspuren alle belegt sind und daher nur eine Geschwindigkeitsoptimierung vorgenommen werden kann.

Bei autonomen Fahrzeugen kann es in manchen Fällen sicherer sein, Kollisionen allein durch das Anpassen der Geschwindigkeit zu vermeiden und nur um Hindernisse herum zu lenken, wenn es gar nicht anders geht. In diesen Fällen wird ein Geschwindigkeitsplaner für die Geschwindigkeit während einer Fahrt in einer Spur oder auf einem vorausberechneten Fahrweg benötigt.

Die Patentschrift US 9,766,626 B1 offenbart eine Verhaltensanalyse von beweglichen Objekten in der näheren Umgebung eines autonomen Fahrzeugs. Hierzu werden in der Nähe befindliche Objekte, wie andere Fahrzeuge und Fußgänger, detektiert und ermittelt, wie die detektierten Objekte ihre Umgebung wahrnehmen. Die Informationen werden verwendet, damit das autonome Fahrzeug die Objekte sicher umfahren kann.

Aus der internationalen Veröffentlichung WO 2009/019214 A1 ist ein Verfahren zum Bestimmen eines wahrscheinlichen Bewegungs-Aufenthaltsbereichs eines Lebewesens, insbesondere für die Anwendung in einem Personenschutzsystem in einem Fahrzeug oder einem Fahrsimulator, bekannt. Die Umgebungsinformationen werden mit zumindest einer Sensorik erfasst und mit einer Recheneinheit ausgewertet, um ein Lebewesen zu identifizieren. Für das Lebewesen werden eine Bewegungstrajektorie und ein Bewegungszustand zu einem gegebenen Zeitpunkt ermittelt. Zur Ermittlung des Bewegungs-Aufenthaltsbereichs werden zu dem gegebenen Zeitpunkt ausgehend von einem Ort der Bewegungstrajektorie und dem Bewegungszustand unter Berücksichtigung eines physiologischen Bewegungsvermögens des Lebewesens für einen oder mehrere zukünftige Zeitpunkte mögliche Aufenthaltsorte bestimmt.

Bei vielen Szenarien mit mobilen Robotern, insbesondere Szenarien mit einer Vielzahl von Robotern, werden Pfade bzw. Routen der Roboter zentral berechnet. Die Roboter können in einem solchen Fall nur ihre Bewegung bzw. ihre Geschwindigkeit bei einer Fahrt entlang des festgelegten Wegs ändern. Beispielhaft sind Lagerhausroboter oder Sicherheitsroboter, die einen vorbestimmten Weg abfahren, und Putzroboter genannt.

In Bereichen, in denen Roboterarme und zugleich Menschen arbeiten, ist es wünschenswert, dass die Bewegungen der Roboterarme vorhersagbar sind, um Unfälle zu vermeiden. In diesen Fällen sollte der Roboterarm wiederholt demselben Weg folgen, wenn er eine Aufgabe erfüllt, und nur seine Geschwindigkeit bei der Bewegung längs des vorbestimmten Wegs ändern, damit gesichert ist, dass der Roboterarm nicht mit Personen oder anderen Robotern kollidiert.

Bei Schienenfahrzeugen erfolgt eine automatisierte Geschwindigkeitssteuerung meist anhand einer Detektion von Positionen von Balisen, die längs der Fahrstrecke der Schienenfahrzeuge angeordnet sind. Weiterhin gibt es auch automatisierte Geschwindigkeitsbeschränkungen, mit denen die Geschwindigkeit der Schienenfahrzeuge gesteuert wird. Hindernisse auf der Strecke werden entweder komplett ignoriert, weil sie zu spät erkannt wurden, um vor ihnen zum Stehen zu kommen, oder es wird eine Notbremsung eingeleitet, ohne zu prüfen, ob sich das Hindernis vielleicht von der Strecke wieder entfernt, bevor die aktuelle Objektposition durch das Schienenfahrzeug erreicht ist.

Besonders stark tritt das Kollisionsproblem bei Straßenbahnen auf, die mit anderen Fahrzeugen, Fußgängern und Fahrradfahrern interagieren, wobei die genannten Objekte und Personen häufig den Weg der Straßenbahn kreuzen.

Fahrspurgebundene Fahrzeuge passen üblicherweise ihre Fahrgeschwindigkeit an die aktuelle Geschwindigkeitsbeschränkung an und versuchen, den Abstand oder eine Fahrzeitdifferenz zu dem vor ihnen fahrenden Fahrzeug konstant zu halten. In einigen Fällen können sie Fahrzeuge und andere Objekte beobachten, welche sich außerhalb der Fahrspur befinden, und auf Basis von deren künftiger Position Vorhersagen treffen und dadurch Maßnahmen zur Kollisionsvermeidung ergreifen.

Die meisten Robotersysteme sind dazu konstruiert, in stark überwachten Umgebungen ohne unbekannte Hindernisse zu arbeiten, so dass zusätzliche Maßnahmen zur Kollisionsvermeidung nicht nötig sind. Jedoch werden solche Lösungen benötigt, wenn sich die Roboter in gemischten Umgebungen bewegen, in denen Personen mit Robotern zusammenarbeiten müssen.

Es besteht also die Aufgabe, ein Verfahren und eine entsprechende Vorrichtung anzugeben, mit denen die Geschwindigkeit von autonomen oder halb-autonomen, an vorbestimmte Pfade gebundenen Akteuren, wie zum Beispiel Schienenfahrzeugen oder Robotern, unter Berücksichtigung einer Kollisionsgefahr durch andere Objekte effektiver als bisher geplant werden kann.

Diese Aufgabe wird durch ein Verfahren zur autonomen Geschwindigkeitsplanung eines zumindest halb-autonom gesteuerten, auf einen vorbestimmten Pfad beschränkten beweglichen Akteurs gemäß Patentanspruch 1, durch eine Planungsvorrichtung gemäß Patentanspruch 12 und einen zumindest halb-autonom gesteuerten, auf einen vorbestimmten Pfad beschränkten, beweglichen Akteur gemäß Patentanspruch 13 gelöst.

Bei dem erfindungsgemäßen Verfahren zur autonomen Geschwindigkeitsplanung eines zumindest halb-autonom gesteuerten, auf einen vorbestimmten Pfad beschränkten beweglichen Akteurs werden Sensordaten bezüglich der Umgebung des beweglichen Akteurs erfasst. Als beweglicher Akteur soll in diesem Zusammenhang eine sich zumindest in einer Dimension bewegende technische Funktionseinheit verstanden werden. Eine solche technische Funktionseinheit kann zum Beispiel eine Transporteinheit umfassen, mit der Personen oder Objekte durch den Raum bzw. von einer Position zu einer anderen Position bewegt werden. Solch eine Einheit kann zum Beispiel ein Fahrzeug, ein Flugzeug, einen Transportroboter oder ähnliches umfassen. Eine solche technische Funktionseinheit kann auch eine bewegliche technische Wartungseinheit, eine Montageeinheit oder eine Reparatureinheit umfassen. Unter einem zumindest halb-autonom gesteuerten, auf einen vorbestimmten Pfad beschränkten beweglichen Akteur soll eine technische Funktionseinheit verstanden werden, deren Bewegungen auf bzw. entlang eines vorbestimmten Pfads zumindest halbautonom gesteuert werden. D. h., zumindest ein Teil der automatisierten und autonom agierenden Bewegungssteuerung wird von der technischen Funktionseinheit selbst umfasst.

Das Erfassen der Sensordaten kann zum Beispiel durch den Akteur, genauer gesagt durch ein an dem Akteur befindliches Sensorsystem, erfolgen. Alternativ kann auch ein externes Erfassen der Umgebung, d. h. durch ein außerhalb des Akteurs angeordnetes, ruhendes oder sich bewegendes Sensorsystem erfolgen.

Bei dem erfindungsgemäßen Verfahren werden Objekte in der Umgebung des Akteurs auf Basis der erfassten Sensordaten detektiert. Diese Objekte können zum Beispiel Passanten, in dem Umfeld des Akteurs arbeitende Personen und Fahrzeuge umfassen. Weiterhin werden die Objekte in unterschiedliche Objektklassen eingeteilt, wobei jeder der Objektklassen mindestens ein Bewegungsmodell zugeordnet ist.

Ein solches Bewegungsmodell beschreibt einen funktionellen Zusammenhang zur Ermittlung zumindest einer der folgenden, eventuell auch zeitabhängigen, physikalischen bzw. kinematischen Größen:
- eine Bewegungsrichtung eines Objekts,
- eine Geschwindigkeit eines Objekts,
- eine Beschleunigung eines Objekts.

Ein solches Bewegungsmodell kann zum Beispiel durch ein automatisiertes Lernverfahren vor dem Einsatz des erfindungsgemäßen Verfahrens im regulären Betrieb anhand von Testdaten trainiert bzw. angepasst werden.

Es wird im Rahmen des Verfahrens eine zukünftige Bewegung und/oder zeitabhängige Position der Objekte auf Basis des jeweils mindestens einen zugeordneten Bewegungsmodells zugeordnet. Unter einer Bewegung sollen in diesem Zusammenhang die die Bewegung kennzeichnenden Größen oder Parameter verstanden werden, wie zum Beispiel die Geschwindigkeitswerte, die Beschleunigungswerte und die Bewegungsrichtungen der Objekte.

Überdies wird ein Geschwindigkeitsprofil des beweglichen Akteurs, bei dem ein vorbestimmtes Risikokriterium erfüllt ist, auf Basis der zukünftigen Bewegung und/oder Position der Objekte ermittelt. Unter einem Geschwindigkeitsprofil soll ein zeitabhängiger Verlauf der Geschwindigkeitswerte eines Akteurs, der sich auf bzw. entlang eines vorbestimmten Pfads bewegt, verstanden werden.

Bei dem Verfahren zur autonomen Geschwindigkeitsplanung eines zumindest halb-autonom gesteuerten, auf einen vorbestimmten Pfad beschränkten beweglichen Akteurs erfolgt erfindungsgemäß das Ermitteln eines Geschwindigkeitsprofils mit Hilfe eines gemischt-diskret-kontinuierlichen Optimierungsverfahrens, wobei die diskrete Komponente eine Mehrzahl von Bewegungsmodellen je Objekt berücksichtigt. Ein solches gemischt-diskretkontinuierliches Verfahren kann zum Beispiel ein Monte-Carlo-Baum-Suchverfahren, einen genetischen Algorithmus oder ein sogenanntes Branch-and-Bound-Verfahren umfassen. Erfindungsgemäß ist das Optimierungsverfahren als "Anytime-Optimierungsalgorithmus" ausgebildet. Ein solches Verfahren weist den Vorteil auf, dass es auch bei einem hohen Rechenaufwand ein möglicherweise suboptimales Ergebnis aufweist, wenn zum Beispiel ein bestimmtes Zeitlimit überschritten ist. Da gemischt-diskret-kontinuierliche Optimierungsverfahren einen erhöhten Rechenaufwand erfordern, kann es bei beschränkter Rechenkapazität sinnvoll sein, einen solchen Optimierungsprozess schon vor dem Erreichen des optimalen Ergebnisses abzubrechen, um möglichst aktuelle bzw. echtzeitnahe Geschwindigkeitsprofile zu erhalten.

Vorteilhaft kann bei dem erfindungsgemäßen Verfahren ein Risiko einer Kollision des Akteurs mit anderen, möglicherweise beweglichen Objekten, die den Pfad des Akteurs kreuzen oder tangieren, erreicht werden. Durch das antizipierende Verhalten des Akteurs können in dem Fall, dass der Akteur eine Personentransporteinheit umfasst, Notbremsmanöver reduziert werden, wodurch die Sicherheit und der Komfort der Passagiere verbessert wird.

Die erfindungsgemäße Planungsvorrichtung weist eine Sensorschnittstelle zum Erfassen von Sensordaten bezüglich einer Umgebung eines beweglichen Akteurs auf. Teil der erfindungsgemäßen Planungsvorrichtung ist auch eine Detektionseinheit zum Detektieren von Objekten in der Umgebung auf Basis der erfassten Sensordaten. Die erfindungsgemäße Planungsvorrichtung umfasst zudem eine Klassifizierungseinheit zum Einteilen der Objekte in unterschiedliche Objektklassen, wobei jeder der Objektklassen mindestens ein Bewegungsmodell zugeordnet ist. Weiterhin weist die Planungsvorrichtung eine Ermittlungseinheit zum Ermitteln einer zukünftigen Bewegung und/oder Position der Objekte auf Basis des jeweils mindestens einen zugeordneten Bewegungsmodells auf. Teil der erfindungsgemäßen Planungsvorrichtung ist auch eine Profilermittlungseinheit. Die Profilermittlungseinheit ist dazu eingerichtet, ein Geschwindigkeitsprofil des beweglichen Akteurs, bei dem ein vorbestimmtes Risikokriterium erfüllt ist, auf Basis einer zukünftigen Bewegung und/oder Position der Objekte zu ermitteln. Die erfindungsgemäße Planungsvorrichtung teilt die Vorteile des erfindungsgemäßen Verfahrens zur autonomen Geschwindigkeitsplanung eines zumindest halb-autonom gesteuerten, auf einen vorbestimmten Pfad beschränkten beweglichen Akteurs.

Der erfindungsgemäße zumindest halb-autonom gesteuerte, auf einen vorbestimmten Pfad beschränkte bewegliche Akteur, vorzugsweise ein Fahrzeug, besonders bevorzugt ein Schienenfahrzeug, weist eine erfindungsgemäße Planungsvorrichtung auf. Der erfindungsgemäße zumindest halb-autonom gesteuerte, auf einen vorbestimmten Pfad beschränkte bewegliche Akteur teilt die Vorteile der erfindungsgemäßen Planungsvorrichtung.

Teile der erfindungsgemäßen Planungsvorrichtung können zum überwiegenden Teil in Form von Softwarekomponenten ausgebildet sein. Dies betrifft insbesondere Teile der Sensorschnittstelle, der Detektionseinheit, der Klassifizierungseinheit, der Ermittlungseinheit und der Profilermittlungseinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine teilweise softwaremäßige Realisierung hat den Vorteil, dass auch schon bisher in halbautonomen Systemen genutzte Rechnersysteme auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung eines solchen Rechnersystems ladbar ist, mit Programmabschnitten, um alle Schritte des Verfahrens zur autonomen Geschwindigkeitsplanung eines zumindest halb-autonom gesteuerten, auf einen vorbestimmten Pfad beschränkten beweglichen Akteurs auszuführen, wenn das Computerprogramm in dem Rechnersystem ausgeführt wird.

Ein solches Computerprogrammprodukt kann neben dem Computerprogramm gegebenenfalls zusätzliche Bestandteile, wie z.B. eine Dokumentation und/oder zusätzliche Komponenten, auch Hardware-Komponenten, wie z.B. Hardware-Schlüssel (Dongles etc.) zur Nutzung der Software, umfassen.

Zum Transport zur Speichereinrichtung des Rechnersystems und/oder zur Speicherung an dem Rechnersystem kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung auch die verschiedenen Merkmale unterschiedlicher Ausführungsbeispiele und Ansprüche auch zu neuen Ausführungsbeispielen kombiniert werden.

In einer bevorzugten Ausgestaltung des erfindungsgemäßen Verfahrens zur autonomen Geschwindigkeitsplanung eines zumindest halb-autonom gesteuerten, auf einen vorbestimmten Pfad beschränkten beweglichen Akteurs weist der bewegliche Akteur eine der nachfolgenden Funktionseinheiten auf:
- einen Roboter,
- ein Fahrzeug, vorzugsweise ein Schienenfahrzeug.

Roboter können sich autonom in Bereichen bewegen, in denen auch Personen tätig sind. Mit Hilfe des erfindungsgemäßen Verfahrens lässt sich die Sicherheit der Personen erhöhen, wobei eine möglichst effiziente Arbeitsweise des Roboters trotzdem erhalten bleibt. Denn der Roboter reagiert flexibel auf das Verhalten der in seinem Umfeld auftretenden, möglicherweise beweglichen Objekte.

Schienenfahrzeuge sind ebenfalls auf die von ihnen genutzten Schienenwege als Pfade beschränkt, können aber ihre Geschwindigkeit in der Regel selbst ändern. Vorteilhaft können die Schienenfahrzeuge ihre Geschwindigkeit antizipierend an das prognostizierte Verhalten der übrigen Verkehrsteilnehmer anpassen, so dass die Sicherheit der Verkehrsteilnehmer sowie der Insassen der Schienenfahrzeuge verbessert ist.

In einer Ausgestaltung des erfindungsgemäßen Verfahrens zur autonomen Geschwindigkeitsplanung eines zumindest halb-autonom gesteuerten, auf einen vorbestimmten Pfad beschränkten beweglichen Akteurs erfolgt das Detektieren von Objekten durch ein auf einem maschinellen Lernverfahren basierendes Modell. Ein maschinelles Lernverfahren lässt sich im Gegensatz zu einem starren Modell deutlich flexibler und präziser an Szenarien anpassen, die entweder nur unzureichend, mit hohem Aufwand oder gar nicht durch ein starres Modell beschreibbar sind.

In einer effektiven Ausgestaltung des erfindungsgemäßen Verfahrens zur autonomen Geschwindigkeitsplanung eines zumindest halb-autonom gesteuerten, auf einen vorbestimmten Pfad beschränkten beweglichen Akteurs erfolgt das Einteilen der Objekte in unterschiedliche Objektklassen durch ein auf einem maschinellen Lernverfahren basierendes Modell. Wie bereits erwähnt, ermöglicht ein solches Lernverfahren eine hochflexible und trotzdem sehr präzise Anpassung von Modellstrukturen an unterschiedliche Szenarien.

In einer vorteilhaften Variante des erfindungsgemäßen Verfahrens zur autonomen Geschwindigkeitsplanung eines zumindest halb-autonom gesteuerten, auf einen vorbestimmten Pfad beschränkten beweglichen Akteurs ist ein jeweiliges Bewegungsmodell mit Hilfe eines maschinellen Lernverfahrens erzeugt. Vorteilhaft können mit einem maschinellen Lernverfahren unterschiedliche Bewegungsmodelle für unterschiedliche Klassen von Objekten flexibel trainiert werden. Diese Art der trainierten Modelle können deutlich genauer an das individuelle Bewegungsverhalten dieser Objekte angepasst werden als starre Modell, bei denen nur einzelne Parameter angepasst werden können.

In einer vorteilhaften Ausgestaltung des erfindungsgemäßen Trainingsverfahrens zur autonomen Geschwindigkeitsplanung eines zumindest halb-autonom gesteuerten, auf einen vorbestimmten Pfad beschränkten beweglichen Akteurs erfolgt das Ermitteln eines Geschwindigkeitsprofils mit Hilfe eines rein kontinuierlichen Optimierungsverfahrens, wobei für jedes Objekt das Bewegungsmodell mit der höchsten Wahrscheinlichkeit berücksichtigt wird. Vorteilhaft wird bei dieser Variante ein Rechenaufwand für die Ermittlung eines optimalen Geschwindigkeitsprofils im Vergleich zu einem gemischt-diskret-kontinuierlichen Optimierungsverfahren drastisch reduziert, so dass leichter Prognosedaten in Echtzeit erzeugt werden können.

Als zusätzliches Kriterium kann auch ein einschränkendes Kriterium verwendet werden. Als ein solches einschränkendes Kriterium kann mindestens eines der folgenden Kriterien verwendet werden:
- Geschwindigkeitsbeschränkungen
- Vorfahrtsvorschriften,
- erzwungenes Anhalten,
- Beschleunigungsbeschränkungen.

Vorteilhaft können bei dieser Variante nicht zu beeinflussende Randbedingungen in die Ermittlung des Geschwindigkeitsprofils mit einfließen, so dass die Genauigkeit bzw. Zuverlässigkeit der Planung der Bewegung des Akteurs verbessert wird.

In einer Ausgestaltung des erfindungsgemäßen Verfahrens zur autonomen Geschwindigkeitsplanung eines zumindest halb-autonom gesteuerten, auf einen vorbestimmten Pfad beschränkten beweglichen Akteurs umfasst das Risikokriterium ein Kollisionsrisiko.

Vorteilhaft kann die Sicherheit von Passagieren oder in der Umgebung befindlichen Personen berücksichtigt werden und trotzdem ein möglichst optimales Bewegungsverhalten für das Operationsziel des Akteurs erreicht werden.

Bevorzugt können auch zusätzlich Optimierungsziele für das verwendete Optimierungsverfahren, wie zum Beispiel eine Minimierung der Gesamtbeschleunigung, eine Minimierung der Fahrzeit oder Kombination aus den genannten Optimierungszielen bei dem Optimierungsprozess berücksichtigt werden.

Vorteilhaft können dadurch zusätzlich zu einem Hauptoperationsziel, wie zum Beispiel das Befolgen eines optimalen Geschwindigkeitsprofils, auch andere Aspekte, wie zum Beispiel der Fahrkomfort oder eine möglichst kurze Fahrzeit berücksichtigt werden.

Während zum Beispiel die optimierte Geschwindigkeit das Ergebnis des Optimierungsverfahrens ist, kann eine möglichst kurze Fahrzeit als Optimierungsziel verwendet werden, das bei der Berechnung der optimierten Geschwindigkeit bzw. des optimierten Geschwindigkeitsprofils berücksichtigt werden soll. Zusätzliche Einschränkungen, können, wie bereits erwähnt, Geschwindigkeitslimits sein oder auch die Einschränkung, dass negative Geschwindigkeiten nicht erlaubt sind. Diese Einschränkung hat insbesondere bei Schienenfahrzeugen eine Bedeutung, bei denen Sensoren, die nach vorne gerichtet sind, kein sicheres Fahren in die umgekehrte Richtung des Fahrzeugs ermöglichen.

In einer speziellen Variante des erfindungsgemäßen Verfahrens zur autonomen Geschwindigkeitsplanung eines zumindest halb-autonom gesteuerten, auf einen vorbestimmten Pfad beschränkten beweglichen Akteurs geht die Minimierung der Fahrzeit durch einen Kostenterm mit in das Ermitteln des Geschwindigkeitsprofils ein. Ein solcher Kostenterm ermöglicht eine flexible Berücksichtigung einzelner Optimierungsziele oder Kriterien bei der Optimierung eines Gesamtterms, der dem Optimierungsverfahren zugrunde liegt.

Um eine dynamische Anpassung des Verhaltens des zur autonomen Geschwindigkeitsplanung eines zumindest halb-autonom gesteuerten, auf einen vorbestimmten Pfad beschränkten beweglichen Akteurs an Veränderungen der Umwelt zu erreichen, kann das ermittelte Geschwindigkeitsprofil während einer Bewegung des Akteurs zu aufeinanderfolgenden Zeitpunkten aktualisiert werden. Vorteilhaft wird eine flexible Anpassung an eine Änderung des Bewegungsverhaltens einzelner Objekte ermöglicht, zumal die Klassifizierung und die Bewegungsmodelle Schätzungen umfassen, die nicht immer exakt zutreffend sind und über einen längeren Zeitraum eine Korrektur auf Basis neuer Sensordaten erfordern.

Zur Detektion von Objekten, zur Klassifizierung der Objekte und zur Ermittlung von Bewegungsmodellen kann Kartenmaterial genutzt werden, um exaktere Ergebnisse zu erzeugen. Beispielsweise kann die Position von Straßen Informationen für Bewegungsmodelle von Objekten, in diesem Fall Fahrzeugen, liefern, die auf der Straße unterwegs sind. Befindet sich ein Fahrzeug zum Beispiel auf einer Abbiegespur, was auf Basis einer Straßenkarte ermittelt wird, so kann mit hoher Wahrscheinlichkeit angenommen werden, dass das Fahrzeug abbiegt und nicht weiter geradeausfährt. Vorteilhaft können die einzelnen Verfahrensschritte mit erhöhter Genauigkeit und Zuverlässigkeit erfolgen.

Die Bewegungsmodelle der detektierten Objekte können auch ständig aktualisiert werden. Dabei können auch die bei der Optimierung geplanten Aktionen des beweglichen Akteurs mitberücksichtigt werden. Beispielsweise unterscheiden sich Bewegungsmodelle von Fahrzeugen, welche eine Gleisstrecke überqueren in Abhängigkeit davon, ob ein Schienenfahrzeug vor dem Überqueren der von den Fahrzeugen genutzten Straße anhält oder überhaupt nicht langsamer fährt. Auf diese Weise werden die Bewegungsmodelle der Fahrzeuge weiter präzisiert und flexibel an das Verhalten des beweglichen Akteurs angepasst.

Die Erfindung wird im Folgenden unter Hinweis auf die beigefügten Figuren anhand von Ausführungsbeispielen noch einmal näher erläutert. Es zeigen:
- FIG 1: ein Flussdiagramm, welches ein Verfahren zur autonomen Geschwindigkeitsplanung eines zumindest halb-autonom gesteuerten, auf einen vorbestimmten Pfad beschränkten beweglichen Akteurs gemäß einem Ausführungsbeispiel der Erfindung veranschaulicht,
- FIG 2: eine schematische Darstellung einer Planungsvorrichtung gemäß einem Ausführungsbeispiel der Erfindung,
- FIG 3: eine schematische Darstellung eines Schienentransportsystems mit einem Schienenfahrzeug gemäß einem Ausführungsbeispiel der Erfindung.

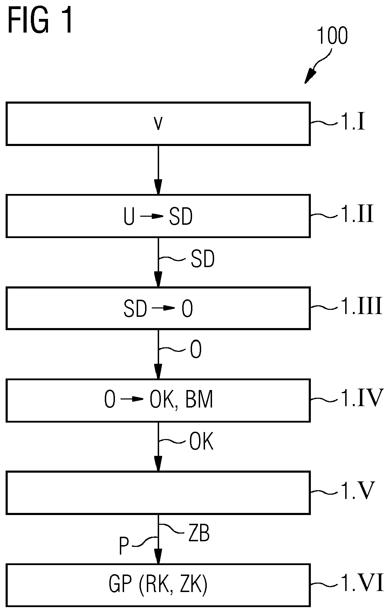

In FIG 1 ist ein Flussdiagramm 100 gezeigt, welches ein Verfahren zur autonomen Geschwindigkeitsplanung eines zumindest halb-autonom gesteuerten, auf einen vorbestimmten Pfad beschränkten beweglichen Akteurs gemäß einem Ausführungsbeispiel der Erfindung veranschaulicht.

Bei dem in FIG 1 veranschaulichten Ausführungsbeispiel fährt bei dem Schritt 1.I ein Schienenfahrzeug auf einer festgelegten Gleisstrecke mit einer aktuellen Geschwindigkeit v. Bei dem Schritt 1.II werden mit Hilfe von Sensoren des Schienenfahrzeugs, beispielsweise Bildaufnahmesensoren, Sensordaten SD von der Umgebung U des Schienenfahrzeugs erfasst. Bei dem Schritt 1.III erfolgt eine automatisierte Detektion von Objekten O in den erfassten Sensordaten SD der Umgebung U des Schienenfahrzeugs. Die Objektdetektion kann unter Anwendung eines mit Hilfe eines maschinellen Lernverfahrens trainierten Modells erfolgen.

Nachfolgend werden bei dem Schritt 1.IV die detektierten Objekte O der Umgebung U in unterschiedliche Objektklassen OK automatisiert eingeteilt. Die Einteilung der Objekte O in die unterschiedlichen Objektklassen OK erfolgt mit Hilfe eines auf Basis eines maschinellen Lernverfahrens trainierten Klassifizierungsvorgangs. Jeder der Objektklassen OK sind in dem in FIG 1 veranschaulichten Ausführungsbeispiel mehrere Bewegungsmodelle BM zugeordnet. Jedem der Bewegungsmodelle BM ist ein Wahrscheinlichkeitswert w zugeteilt, welcher eine Information darüber liefert, mit welcher Wahrscheinlichkeit w das jeweilige Bewegungsmodell BM für ein Objekt O der zugehörigen Objektklasse OK zutreffend ist. Die Ermittlung der Bewegungsmodelle BM sowie deren Zuordnung zu einzelnen Objektklassen OK kann zum Beispiel vorab, d.h. vor der Nutzung des beschriebenen Verfahrens im regulären Betrieb des Schienenfahrzeugs durch einen maschinellen Lernprozess erfolgen. Dabei können in einer Datenbank gespeicherte experimentell erfasste Daten genutzt werden, um mit Hilfe des maschinellen Lernvorgangs zu einer Wahl geeigneter Bewegungsmodelle BM und einer korrekten Zuordnung der Bewegungsmodelle BM zu den einzelnen Objektklassen OK zu kommen.

Bei dem Schritt 1.V erfolgt eine automatisierte Vorhersage eines zukünftigen Bewegungsvorgangs ZB und einer zukünftigen zeitabhängigen Position P der jeweiligen Objekte O. Dieser automatisierte Vorgang kann ebenfalls basierend auf einem Modell erfolgen, das durch ein maschinelles Lernverfahren trainiert wurde, sowie basierend auf aktuellen Positions- und Bewegungsdaten und entsprechenden Daten der Vergangenheit.

Bei dem Schritt 1.VI erfolgt schließlich eine Ermittlung einer optimalen Geschwindigkeit bzw. eines optimalen zukünftigen Geschwindigkeitsprofils GP des Schienenfahrzeugs unter Berücksichtigung eines vorbestimmten Optimierungsziels. Das Optimierungsziel umfasst bei diesem Ausführungsbeispiel die Bedingung, dass das Schienenfahrzeug sein Fahrziel möglichst schnell erreichen soll. Zusätzlich sollen eine Mehrzahl von Nebenbedingungen RK, ZK bzw. Einschränkungen, die ebenfalls erfüllt sein sollen, berücksichtigt werden. Die Nebenbedingungen umfassen zum Beispiel ein vorbestimmtes geringes Risiko RK für Passagiere, Personal und andere Verkehrsteilnehmer. Zusätzliche Nebenbedingungen ZK können zum Beispiel offizielle Geschwindigkeitsbeschränkungen, Vorfahrtsregeln, erzwungene Haltevorgänge, wie zum Beispiel an Bahnhöfen oder Haltestellen, und Beschleunigungsbeschränkungen aufgrund von Sicherheitsbestimmungen und zur Gewährleistung des Komforts etwaiger Passagiere des Schienenfahrzeugs umfassen.

Zusätzlich zu dem genannten Optimierungsziel können noch weitere Optimierungsziele bei der Ermittlung des optimalen zukünftigen Geschwindigkeitsprofils des Schienenfahrzeugs, wie zum Beispiel ein möglichst geringes Kollisionsrisiko, eine minimale Gesamtbeschleunigung, um einen möglichst geringen Energieverbrauch zu erreichen, eine möglichst geringe maximale Beschleunigung des Schienenfahrzeugs, um den Komfort der Passagiere zu erhöhen, eine möglichst kurze Reisezeit oder eine Kombination von mindestens zwei der genannten Nebenbedingungen berücksichtigt werden.

Wie bereits erwähnt, kann jedem der klassifizierten Objekte O eine diskrete Anzahl von Bewegungsmodellen BM zugeordnet sein. Die Geschwindigkeitsoptimierung ist dagegen kontinuierlicher Natur. Mithin ergibt sich ein gemischt-diskret-kontinuierliches Optimierungsproblem. Aufgrund der genannten Struktur des Optimierungsproblems kann sich der Rechenaufwand bei der Suche nach einer Lösung für das genannte Problem extrem hoch gestalten. Um den Aufwand zu reduzieren, wird bei dem in FIG 1 gezeigten Ausführungsbeispiel die Anzahl der Bewegungsmodelle BM pro Objekt O auf genau ein einziges Bewegungsmodell BM, und zwar das jeweils wahrscheinlichste Bewegungsmodell BM reduziert. Auf diese Weise wird das diskretkontinuierlich-gemischte Optimierungsproblem auf ein rein kontinuierliches Optimierungsproblem reduziert. Eine solche Problemstruktur erlaubt die Anwendung einfacherer kontinuierlicher Optimierungsverfahren, welche zum Beispiel durch lineares Programmieren erzeugt werden können. Dadurch wird ein schnelles und einfacheres Berechnen einer Lösung des Optimierungsproblems möglich. Enthalten die Nebenbedingungen zeitliche Einschränkungen, so kann zum Beispiel in die Struktur des Optimierungsterms noch ein Kostenterm eingefügt werden, bei dessen Berücksichtigung eine Verletzung einer zeitlichen Einschränkung zwar möglich ist, aber diese sich auf den Optimierungsvorgang negativ auswirkt, so dass eine Verletzung der zeitlichen Einschränkung möglichst gering gehalten wird.

Da es sich bei den Objektklassifizierungen OK und Bewegungsmodellen BM um Schätzungen der Identität tatsächlicher Objekte und deren Bewegungsverhalten handelt, können sich Klassifizierungen und Zuordnungen von Bewegungsmodellen stark ändern, je mehr Beobachtungen von einem Objekt erfolgt sind, und in Abhängigkeit davon, wie sich das beobachtete Objekt in der Umgebung des Schienenfahrzeugs weiterbewegt. Daher wird die Ermittlung des Geschwindigkeitsprofils des Schienenfahrzeugs regelmäßig, beispielsweise mehrmals pro Sekunde, durchgeführt, so dass unerwartete Änderungen in der Umgebung des Schienenfahrzeugs möglichst zeitnah berücksichtigt werden können.

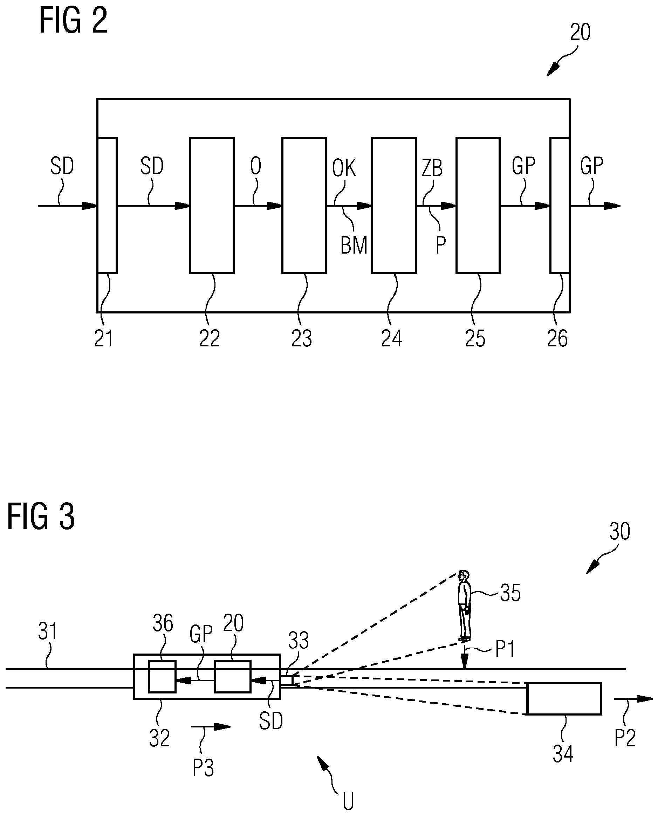

In FIG 2 ist eine Planungsvorrichtung 20 gemäß einem Ausführungsbeispiel der Erfindung dargestellt. Eine solche Planungsvorrichtung 20 kann zum Beispiel in einem Schienenfahrzeug 30 (siehe FIG 3) angeordnet sein. Die Planungsvorrichtung 20 kann aber auch zentral für eine Mehrzahl von Schienenfahrzeugen angeordnet sein, beispielsweise dann, wenn die Berechnungen besonders präzise ausfallen sollen und der Rechenaufwand für die im Zusammenhang mit FIG 1 beschriebene Optimierung des Geschwindigkeitsprofils besonders hoch ist.

Die in FIG 2 gezeigte Planungsvorrichtung 20 weist eine Sensorschnittstelle 21 auf. Die Sensorschnittstelle 21 empfängt Sensordaten SD, die von Sensoren eines Schienenfahrzeugs oder von anderen zwischengeschalteten Datenübertragungseinheiten, Auswertungseinheiten oder Steuerungseinheiten an die Planungsvorrichtung 20 übermittelt werden. Die Sensordaten SD umfassen in dem in FIG 2 veranschaulichten Ausführungsbeispiel Bilddaten von der Umgebung U eines Schienenfahrzeugs.

Die empfangenen Sensordaten SD werden an eine Detektionseinheit 22 übermittelt, die ebenfalls Teil der Planungsvorrichtung 20 ist. Die Detektionseinheit 22 ist dazu eingerichtet, Objekte O in der Umgebung U auf Basis der erfassten Sensordaten SD zu detektieren. Hierzu nutzt die Detektionseinheit 22 ein modellhaftes Identifizierungsverfahren, dass mit Hilfe eines maschinellen Lernverfahrens trainiert wurde. Die von der Detektionseinheit 22 übermittelten Objekte O werden an eine Klassifizierungseinheit 23 übermittelt. Die Klassifizierungseinheit 23 ist ebenfalls von der Planungsvorrichtung 20 umfasst und ist dazu eingerichtet, Objekte O in unterschiedliche Objektklassen OK einzuteilen. Jeder der Objektklassen OK ist mindestens ein Bewegungsmodell BM zugeordnet. Die Klassifizierungseinheit 23 nutzt in dem in FIG 2 veranschaulichten Ausführungsbeispiel zur Klassifizierung der Objekte O ein durch ein maschinelles Lernverfahrens trainiertes Klassifizierungsverfahren.

Die ermittelten Objektklassen OK mit den ihnen jeweils zugeordneten Bewegungsmodellen BM werden an eine Ermittlungseinheit 24 übermittelt, die dazu eingerichtet ist, eine zukünftige Bewegung ZB und/oder Position P der Objekte O auf Basis des jeweils mindestens einen zugeordneten Bewegungsmodells BW zu ermitteln. Zur Ermittlung der zukünftigen Bewegung ZB, d.h. der zukünftigen Bewegungsrichtung und der Geschwindigkeit und/oder Position P der Objekte O nutzt die Ermittlungseinheit 24 ein Ermittlungsverfahren, das auf einem Modellzusammenhang basiert, welcher durch ein maschinelles Lernverfahren gelernt wurde. Die ermittelten Daten über die zukünftige Bewegung ZB und die Position P der Objekte O werden weiterhin an eine Profilermittlungseinheit 25 übermittelt.

Die Profilermittlungseinheit 25, welche ebenfalls Teil der Planungsvorrichtung 20 ist, ist dazu eingerichtet, ein Geschwindigkeitsprofil GP eines Schienenfahrzeugs auf Basis der empfangenen Daten ZB, P sowie auf Basis von Optimierungszielen und gegebenenfalls auch Nebenbedingungen, insbesondere zusätzlichen Kriterien, zu ermitteln. Die Details der Funktionsweise einer solchen Ermittlung eines Geschwindigkeitsprofils GP sind im Zusammenhang mit der FIG 1 ausführlich beschrieben. Das ermittelte Geschwindigkeitsprofil GP wird über eine Ausgangsschnittstelle 26 ausgegeben und kann von bezüglich der Planungsvorrichtung 20 externen Einheiten, wie zum Beispiel einer Steuerungseinrichtung eines Schienenfahrzeugs, zur Steuerung des Schienenfahrzeugs weiterverarbeitet werden.

In FIG 3 ist ein Schienentransportsystem 30 mit einem Fahrzeug, in diesem speziellen Fall ein Schienenfahrzeug, genauer gesagt eine Straßenbahn 32, gemäß einem Ausführungsbeispiel der Erfindung veranschaulicht. Die Straßenbahn 32 fährt auf einer Gleisstrecke 31 in Pfeilrichtung P3, d. h. in FIG 3 nach rechts, und erfasst durch eine Sensoreinheit 33 zwei unterschiedliche Objekte 34, 35, welche sich in der Umgebung U der Straßenbahn 32 aufhalten. Bei einem dieser detektierten Objekte handelt es sich um eine Person 35, die sich in Pfeilrichtung P1, d. h. in Richtung des Gleiskörpers der Gleisstrecke 31 bewegt. Bei dem zweiten Objekt 34 handelt es sich um ein Kraftfahrzeug, welches in Pfeilrichtung P2 parallel zur Bewegungsrichtung P3 der Straßenbahn 32 unterwegs ist und teilweise auf der Gleisstrecke 31 fährt.

Die erfassten Sensordaten SD werden an eine Planungsvorrichtung 20, wie sie in FIG 2 veranschaulicht ist, übermittelt. Die Planungsvorrichtung 20 ist in dem in FIG 3 gezeigten Ausführungsbeispiel in der Straßenbahn 32 angeordnet. Die Planungsvorrichtung 20 errechnet anhand der erfassten Sensordaten SD unter Berücksichtigung von Optimierungszielen sowie zusätzlichen Nebenbedingungen ein die Zukunft betreffendes Geschwindigkeitsprofil GP der Straßenbahn 32. Das ermittelte Geschwindigkeitsprofil GP wird an eine von der Straßenbahn 32 ebenfalls umfasste autonome Steuereinrichtung 36 übermittelt, die auf Basis dieses Geschwindigkeitsprofils GP die Geschwindigkeit der Straßenbahn 31 steuert. Beispielsweise wird eine Geschwindigkeit v der Straßenbahn 32 reduziert, um der den Gleiskörper 31 kreuzenden Person 35 einen gefahrlosen Übergang zu ermöglichen. Nach dem Übergang wird die Geschwindigkeit der Straßenbahn 32 dann an die Geschwindigkeit des Kraftfahrzeugs 34 angepasst, um ein Auffahren auf das Kraftfahrzeug 34 zu vermeiden. Das Geschwindigkeitsprofil GP wird auf Basis ständig neu erfasster Sensordaten in kurzen Zeitabständen aktualisiert. Mithin kann die Straßenbahn 32 für den Fall, dass sich das Kraftfahrzeug 34 von der Gleisstrecke 31 wegbewegt, weil dessen Fahrer die von hinten kommende Straßenbahn 32 bemerkt hat, ihre Geschwindigkeit v wieder auf ein für sie optimales Maß erhöhen.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zur autonomen Geschwindigkeitsplanung eines zumindest halb-autonom gesteuerten, auf einen vorbestimmten Pfad beschränkten beweglichen Akteurs (32), aufweisend die Schritte:
- Erfassen von Sensordaten (SD) bezüglich der Umgebung (U) des beweglichen Akteurs (32),
- Detektieren von Objekten (O) in der Umgebung (U) auf Basis der erfassten Sensordaten (SD),
- Einteilen der Objekte (O) in unterschiedliche Objektklassen (OK), wobei jeder der Objektklassen (OK) mindestens ein Bewegungsmodell (BM) zugeordnet ist,
- Ermitteln einer zukünftigen Bewegung (ZB) und/oder Position (P) der Objekte (O) auf Basis des jeweils mindestens einen zugeordneten Bewegungsmodells (BW),
- Ermitteln eines Geschwindigkeitsprofils (GP) des beweglichen Akteurs (1), bei dem ein vorbestimmtes Risikokriterium (RK) erfüllt ist, auf Basis der zukünftigen Bewegung (ZB) und/oder Position (P) der Objekte (O),
**dadurch gekennzeichnet,**
- **dass** das Ermitteln eines Geschwindigkeitsprofils (GP) mit Hilfe eines gemischt-diskret-kontinuierlichen Optimierungsverfahrens erfolgt, wobei die diskrete Komponente eine Mehrzahl von Bewegungsmodellen (BM) je Objekt (O) berücksichtigt, und
- **dass** ein "Anytime-Optimierungsalgorithmus" verwendet wird.

2. Verfahren nach Anspruch 1, wobei der bewegliche Akteur (32) eine der folgenden Funktionseinheiten umfasst:
- einen Roboter,
- ein Fahrzeug, vorzugsweise ein Schienenfahrzeug (32).

3. Verfahren nach Anspruch 1 oder 2, wobei das Detektieren von Objekten (O) durch ein auf einem maschinellen Lernverfahren basierendes Modell erfolgt.

4. Verfahren nach einem der vorstehenden Ansprüche, wobei das Einteilen der Objekte (O) in unterschiedliche Objektklassen (OK) durch ein auf einem maschinellen Lernverfahren basierendes Modell erfolgt.

5. Verfahren nach einem der vorstehenden Ansprüche, wobei ein jeweiliges Bewegungsmodell (BM) mit Hilfe eines maschinellen Lernverfahrens erzeugt ist.

6. Verfahren nach einem der Ansprüche 1 bis 5, wobei das Ermitteln eines Geschwindigkeitsprofils (GP) mit Hilfe eines rein kontinuierlichen Optimierungsverfahrens erfolgt, wobei für jedes Objekt (O) das Bewegungsmodell (BM) mit der höchsten Wahrscheinlichkeit berücksichtigt wird.

7. Verfahren nach einem der vorstehenden Ansprüche, wobei als zusätzliches Kriterium (ZK) ein einschränkendes Kriterium verwendet wird.

8. Verfahren nach Anspruch 7, wobei als einschränkendes Kriterium mindestens eines der folgenden Kriterien verwendet wird:
- Geschwindigkeitsbeschränkungen,
- Vorfahrtsvorschriften,
- erzwungenes Anhalten,
- Beschleunigungsbeschränkungen.

9. Verfahren nach einem der vorstehenden Ansprüche, wobei das Risikokriterium (RK) ein Kollisionsrisiko des Akteurs (32) mit einem Objekt (O) in der Umgebung (U) des Akteurs (32) betrifft.

10. Verfahren nach Anspruch 9, wobei die Minimierung der Fahrzeit durch einen Kostenterm mit in das Ermitteln des Geschwindigkeitsprofils (GP) eingeht.

11. Verfahren nach einem der vorstehenden Ansprüche, wobei das ermittelte Geschwindigkeitsprofil (GP) während einer Bewegung des Akteurs (32) zu aufeinanderfolgenden Zeitpunkten aktualisiert wird.

12. Planungsvorrichtung (20), aufweisend:
- eine Sensorschnittstelle (21) zum Erfassen von Sensordaten (SD) bezüglich einer Umgebung (U) eines zumindest halb-autonom gesteuerten, auf einen vorbestimmten Pfad beschränkten beweglichen Akteurs (32),
- eine Detektionseinheit (22) zum Detektieren von Objekten (O) in der Umgebung (U) auf Basis der erfassten Sensordaten (SD),
- eine Klassifizierungseinheit (23) zum Einteilen der Objekte (O) in unterschiedliche Objektklassen (OK), wobei jeder der Objektklassen (OK) mindestens ein Bewegungsmodell (BM) zugeordnet ist,
- eine Ermittlungseinheit (24) zum Ermitteln einer zukünftigen Bewegung (ZB) und/oder Position (P) der Objekte (O) auf Basis des jeweils mindestens einen zugeordneten Bewegungsmodells (BW),
- eine Profilermittlungseinheit (25) zum Ermitteln eines Geschwindigkeitsprofils (GP) des beweglichen Akteurs (32), bei dem ein vorbestimmtes Risikokriterium (RK) erfüllt ist, auf Basis der zukünftigen Bewegung (ZB) und/oder Position (P) der Objekte (O),
**dadurch gekennzeichnet,**
- **dass** das Ermitteln eines Geschwindigkeitsprofils (GP) mit Hilfe eines gemischt-diskret-kontinuierlichen Optimierungsverfahrens erfolgt,
- **dass** die diskrete Komponente eine Mehrzahl von Bewegungsmodellen (BM) je Objekt (O) berücksichtigt,
- **dass** ein "Anytime-Optimierungsalgorithmus" verwendet wird.

13. Zumindest halb-autonom gesteuerter, auf einen vorbestimmten Pfad beschränkter beweglicher Akteur (32), vorzugsweise Fahrzeug, aufweisend eine Planungsvorrichtung (20) nach Anspruch 12.

14. Computerprogrammprodukt mit einem Computerprogramm, welches direkt in eine Speichereinheit eines beweglichen Akteurs (32) ladbar ist, mit Programmabschnitten, um alle Schritte eines Verfahrens nach einem der Ansprüche 1 bis 11 auszuführen, wenn das Computerprogramm in dem beweglichen Akteur (32) ausgeführt wird.

15. Computerlesbares Medium, auf welchem von einer Rechnereinheit ausführbare Programmabschnitte gespeichert sind, um alle Schritte des Verfahrens nach einem der Ansprüche 1 bis 11 auszuführen, wenn die Programmabschnitte von der Rechnereinheit ausgeführt werden.

## Claims

1. Method for autonomous speed planning of an at least semi-autonomously controlled mobile actor (32) restricted to a predetermined path, having the steps:
- capture of sensor data (SD) relating to the environment (U) of the mobile actor (32),
- detection of objects (O) in the environment (U) based on the captured sensor data (SD),
- division of the objects (O) into different object classes (OK), wherein each of the object classes (OK) is assigned at least one movement model (BM),
- determination of a future movement (ZB) and/or position (P) of the objects (O) based on the at least one assigned movement model (BW) in each case,
- determination of a speed profile (GP) of the mobile actor (1), in which a predetermined risk criterion (RK) is met, based on the future movement (ZB) and/or position (P) of the objects (O),
**characterised in that**
- the determination of a speed profile (GP) takes place with the help of a mixed-discrete-continuous optimisation method, wherein the discrete component takes into account a plurality of movement models (BM) per object (O), and
- an "anytime optimisation algorithm" is used.

2. Method according to claim 1, wherein the mobile actor (32) comprises one of the following functional units:
- a robot,
- a vehicle, preferably a rail vehicle (32).

3. Method according to claim 1 or 2, wherein the detection of objects (O) is carried out by a model based on a machine learning method.

4. Method according to one of the preceding claims, wherein the division of the objects (O) into different object classes (OK) takes place by means of a model based on a machine learning method.

5. Method according to one of the preceding claims, wherein a respective movement model (BM) is generated with the help of a machine learning method.

6. Method according to one of claims 1 to 5, wherein the determination of a speed profile (GP) takes place with the help of a purely continuous optimisation method, wherein the movement model (BM) with the highest probability is taken into account for each object (0).

7. Method according to one of the preceding claims, wherein a restrictive criterion is used as an additional criterion (ZK).

8. Method according to claim 7, wherein at least one of the following criteria is used as a restrictive criterion:
- speed limits,
- right of way rules,
- forced stop,
- acceleration limits.

9. Method according to one of the preceding claims, wherein the risk criterion (RK) relates to a risk of collision between the actor (32) and an object (O) in the environment (U) of the actor (32).

10. Method according to claim 9, wherein the minimisation of the travel time by means of a cost term is included in the determination of the speed profile (GP).

11. Method according to one of the preceding claims, wherein the determined speed profile (GP) is updated at successive points in time during a movement of the actor (32).

12. Planning device (20), having:
- a sensor interface (21) for capturing sensor data (SD) relating to an environment (U) of an at least semi-autonomously controlled mobile actor (32) restricted to a predetermined path,
- a detection unit (22) for detecting objects (O) in the environment (U) based on the captured sensor data (SD),
- a classification unit (23) for dividing the objects (O) into different object classes (OK), wherein each of the object classes (OK) is assigned at least one movement model (BM),
- a determination unit (24) for determining a future movement (ZB) and/or position (P) of the objects (O) based on the at least one assigned movement model (BW),
- a profile determination unit (25) for determining a speed profile (GP) of the mobile actor (32), in which a predetermined risk criterion (RK) is met, based on the future movement (ZB) and/or position (P) of the objects (O),
**characterised in that**
- the determination of a speed profile (GP) takes place with the help of a mixed-discrete-continuous optimisation method,
- the discrete component takes into account a plurality of movement models (BM) per object (O),
- an "anytime optimisation algorithm" is used.

13. At least semi-autonomously controlled mobile actor (32), preferably a vehicle, restricted to a predetermined path, having a planning device (20) according to claim 12.

14. Computer program product having a computer program which can be loaded directly into a storage unit of a mobile actor (32), having program sections to carry out all steps of a method according to one of claims 1 to 11 when the computer program is executed in the mobile actor (32).

15. Computer-readable medium, on which program sections which can be executed by a computer unit are stored in order to execute all steps of the method according to one of claims 1 to 11 when the program sections are executed by the computer unit.

## Revendications

1. Procédé de planification autonome de vitesse d'un acteur ( 32 ) commandé au moins de manière semi autonome et mobile en étant limité à un trajet déterminé à l'avance, comportant les stades :
- relevé de données (SD) de capteur, concernant les alentours (U) de l'acteur (32) mobile,
- détection d'objets (O) aux alentours (U) sur la base des données (SD) de capteur relevées,
- classement des objets (O) en des classes (OK) d'objets différentes, au moins un modèle (BM) de déplacement étant associé à chacune des classes (OK) d'objets,
- détermination d'un déplacement (ZB) et/ou d'une position (P) à venir de l'objet sur la base du au moins un modèle (BW) de déplacement associé respectivement,
- détermination d'un profil (GP) de vitesse de l'acteur (1) mobile, dans lequel un critère (RK) de risque déterminé à l'avance est satisfait sur la base du déplacement (ZB) et/ou de la position (P) à venir de l'objet (O),
**caractérisé**
- **en ce que** la détermination d'un profil (GP) de vitesse s'effectue à l'aide d'un procédé d'optimisation mixte-discret-continu, la composante discrète prenant en compte une pluralité de modèles (BM) de déplacement pour chaque objet (O), et
- **en ce que** l'on utilise un « algorithme d'optimisation Anytime ».

2. Procédé suivant la revendication 1, dans lequel l'acteur (32) mobile comprend l'une des unités fonctionnelles suivantes :
- un robot,
- un véhicule, de préférence un véhicule (32) ferroviaire.

3. Procédé suivant la revendication 1 ou 2, dans lequel la détection d'objets (O) s'effectue par un modèle reposant sur un procédé d'apprentissage automatique.

4. Procédé suivant l'une des revendications précédentes, dans lequel le classement des objets (O) en des classes (OK) d'objets différentes s'effectue par un modèle reposant sur un procédé d'apprentissage automatique.

5. Procédé suivant l'une des revendications précédentes, dans lequel un modèle (BM) de déplacement respectif est produit à l'aide d'un procédé d'apprentissage automatique.

6. Procédé suivant l'une des revendications 1 à 5, dans lequel la détermination d'un profil (GP) de vitesse s'effectue à l'aide d'un procédé d'optimisation continu, le modèle (BM) de déplacement ayant la probabilité la plus grande étant pris en compte pour chaque objet (O).

7. Procédé suivant l'une des revendications précédentes, dans lequel on utilise, comme critère (ZK) supplémentaire, un critère limitant.

8. Procédé suivant la revendication 7, dans lequel on utilise, comme critère limitant, au moins l'un des critères suivants :
- limitations de vitesse,
- prescriptions de priorité,
- arrêt forcé,
- limitations d'accélération.

9. Procédé suivant l'une des revendications précédentes, dans lequel le critère (RK) de risque concerne un risque de collision de l'acteur (32) avec un objet (O) aux alentours (U) de l'acteur (32).

10. Procédé suivant la revendication 9, dans lequel la minimisation du temps de parcours entre par un terme de coût dans la détermination du profil (GP) de vitesse.

11. Procédé suivant l'une des revendications précédentes, dans lequel on met à jour, à des instants successifs pendant un déplacement de l'acteur (32), le profil (GP) de vitesse, qui est déterminé.

12. Système (20) de planification, comportant :
- une interface (21) de capteur pour le relevé de données (SD) de capteur concernant les alentours (U) d'un acteur (32) commandé au moins de manière semi-autonome et mobile de manière limitée à un trajet déterminé à l'avance,
- une unité (22) de détection pour la détection d'objets (O) aux alentours (U) sur la base des données (SD) de capteur détectées,
- une unité (23) de classification pour classer les objets (o) en des classes (OK) d'objets différentes, au moins un modèle (BM) de déplacement étant associé à chacune des classes (OK) d'objets,
- une unité (24) de détermination pour la détermination d'un déplacement (ZB) et/ou d'une position (P) à venir des objets (O), sur la base du au moins un modèle (BW) de déplacement associé respectivement,
- une unité (25) de détermination de profil pour la détermination d'un profil (GP) de vitesse de l'acteur (32) mobile, dans lequel un critère (RK) de risque déterminé à l'avance est satisfait, sur la base du déplacement (ZB) et/ou de la position (P) à venir des objets (O),
**caractérisé**
- **en ce que** la détermination d'un profil (GP) de vitesse s'effectue à l'aide d'un procédé d'optimisation mixte-discret-continu,
- **en ce que** la composante discrète tient compte d'une pluralité de modules (BM) de déplacement par objet (O),
- **en ce que** l'on utilise un « algorithme d'optimisation Anytime ».

13. Acteur (32), de préférence véhicule, commandé au moins de manière semi-autonome et mobile de manière limitée à un trajet déterminé à l'avance, comportant un système (20) de planification suivant la revendication 12.

14. Produit de programme d'ordinateur, comprenant un programme d'ordinateur, qui peut être chargé directement dans une unité de mémoire d'un acteur (32) mobile ayant des parties de programme pour effectuer tous les stades d'un procédé suivant l'une des revendications 1 à 11, lorsque le programme d'ordinateur est réalisé dans l'acteur (32) mobile.

15. Support déchiffrable par ordinateur, sur lequel sont mises en mémoire des parties de programme pouvant être réalisées par une unité informatique pour effectuer tous les stades du procédé suivant l'une des revendications 1 11, lorsque les parties de programme sont réalisées par l'unité informatique.
